(19) Europäisches Patentamt
European Patent Office
Office européen des brevets

(11) Veröffentlichungsnummer : **0 207 192 B1**

(12) **EUROPÄISCHE PATENTSCHRIFT**

(45) Veröffentlichungstag der Patentschrift : **30.08.89**

(51) Int. Cl.[4] : **B 29 C 33/64**, C 08 G 18/02, B 27 N 3/00

(21) Anmeldenummer : **85115223.1**

(22) Anmeldetag : **30.11.85**

(54) **Verfahren zur Herstellung von Formkörpern.**

(30) Priorität : **25.06.85 DE 3522659**

(43) Veröffentlichungstag der Anmeldung : **07.01.87 Patentblatt 87/02**

(45) Bekanntmachung des Hinweises auf die Patenterteilung : **30.08.89 Patentblatt 89/35**

(84) Benannte Vertragsstaaten : **AT BE DE FR GB IT SE**

(56) Entgegenhaltungen :
EP-A- 0 122 743
EP-A- 0 129 858
EP-A- 0 135 992

(73) Patentinhaber : **Th. Goldschmidt AG
Goldschmidtstrasse 100 Postfach 101461
D-4300 Essen 1 (DE)**

(72) Erfinder : **Kollmeier, Hans-Joachim, Dr.
Barkhorstrücken 27
D-4300 Essen (DE)**
Erfinder : **Lammerting, Helmut
Schweerstrasse 12
D-5812 Herbede (DE)**

**EP 0 207 192 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zur Herstellung von Formkörpern durch Heißverpressen von lignozellulosehaltigen Werkstoffen mit Polyisocyanaten als Bindemittel unter Mitverwendung eines Mittels zur Trennung des Formkörpers von der Oberfläche der verwendeten Metallpresse.

Bei der Herstellung von ausschließlich mit Polyisocyanaten gebundenen lignozellulosehaltigen Werkstoffen, wie z. B. Spanplatten, Faserplatten, Sperrholz oder Korkplatten, Formkörpern aus Flachs, Stroh oder aus anderen zellulosehaltigen Werkstoffen, sind Trennmittel zur Ablösung des Formkörpers vom Preßblech oder von der Preßform unumgänglich.

Aus der DE-AS 11 31 873 ist es bekannt, als Trennmittel Polyole oder primäre Amine zu verwenden. Die zur Bildung der lignozellulosehaltigen Werkstoffe verwendeten Polyisocyanate reagieren jedoch mit diesen Verbindungen, so daß an der Oberfläche der Formkörper Reaktionsprodukte gebildet werden, welche bei der Weiterverarbeitung der Formkörper, z. B. bei der Verklebung, Beschichtung oder Lackierung, stören können.

Aus der DE-PS 23 25 926 ist es bekannt, 0,1 bis 50 Gew.-%, bezogen auf das Polyisocyanat, einer solchen Verbindung als Trennmittel zu verwenden, die in Gegenwart von Isocyanatgruppen eine Isocyanuratbildung katalysiert. Beispiele von solchen, die Isocyanuratbildung katalysierenden Verbindungen sind Phenol-Mannichbasen, Derivate des Hexahydrotriazins, Alkalisalze von Carbonsäuren, starke Basen oder Verbindungen des Guanidintyps. Die Verbindungen werden auf die Oberfläche des zu verpressenden Formlings, der Preßfläche oder der Preßform gesprüht.

Jedoch haben auch diese als Trennmittel benutzten Verbindungen den Nachteil, daß sie bei jeder Verformung neu aufgetragen werden müssen. Sie stellen keine permanente Beschichtung dar. Die patentgemäß zu verwendenden Verbindungen entziehen außerdem dem Preßkörper an seiner Oberfläche Anteile des zur Bindung benötigten Polyisocyanates.

In der DE-PS 31 11 562 ist ein Verfahren zur Herstellung polyisocyanatgebundener Preß- oder Spanplatten beschrieben, wobei man als interne Trennmittel spezielle Phosphorester, wie z. B. Octyldilaurylphosphat, verwendet.

Die EP-A2-0 122 743 betrifft ein Verfahren zur Herstellung von Polyurethanen nach dem Reaction-Injection-Molding-Verfahren (RIM-Verfahren), dessen Kennzeichen darin besteht, daß man dem Reaktionsgemisch als internes Trennmittel ein Polysiloxan zusetzt, welches wenigstens eine mit Isocyanaten reaktive Gruppe aufweist. Dieses reaktive Siloxan soll in dem flüssigen Polyisocyanat im wesentlichen unlöslich sein. Es kann der Polyolkomponente oder der Isocyanatkomponente zugefügt werden. In letzterem Falle ist es allerdings notwendig, ein zusätzliches siliciumorganisches Tensid zu verwenden, um einerseits das Trennmittel in dem Isocyanat zu verteilen und andererseits eine vorzeitige Reaktion des Isocyanats mit den reaktiven Gruppen des als Trennmittel verwendeten Polysiloxans zu verhindern.

Der EP-A2-0 135 992 kann ein Verfahren zur Herstellung von Formkörpern durch Verpressen von lignozellulosehaltigen Werkstoffen mit Polyisocyanaten als Bindemittel entnommen werden, bei welchem die Oberflächen der Preßform mit einem Trennmittel versehen werden, welches aus einem funktionellen Polysiloxan besteht und zusätzlich bis zu 25 Gew.-% eines flüssigen Organopolysiloxans enthalten kann. Das funktionelle Polysiloxan entspricht dabei der allgemeinen Formel

$$(CH_3)_3Si(OSiCH_2)_n(SiOCH_2)_m\underset{\substack{|\\ X}}{Si}OCH_3$$

wobei n eine ganze Zahl von 5 bis 30, m eine ganze Zahl von 1 bis 20 und X die Gruppe

$$-CH_2OH,\quad \underset{\substack{|\\ CH_3}}{-CHOH},\quad -COH,\quad -COOH \quad \text{oder} \quad -OH \text{ ist.}$$

Das auf die Formoberfläche aufgebrachte Siloxan kann bei Temperaturen zwischen 75 und 200 °C ausgehärtet werden, um die Permanenz des Trenneffektes zu erhöhen.

Der vorliegenden Erfindung liegt die Aufgabe zugrunde, für ein Verfahren der vorgenannten Art ein Trennmittel zu finden, welches auf die dem Preßgut zugewendete Seite der Preßbleche oder der Preßform aufgebracht wird, während mehrerer Preßvorgänge wirksam ist und deshalb nicht bei jeder Verpressung erneut aufgebracht werden muß.

Überraschenderweise kann diese Aufgabe dadurch gelöst werden, daß man auf die dem Preßgut zugewendete Oberfläche der Preßbleche oder der Preßformen ein Gemisch siliciumorganischer Verbindungen aufbringt und bei Temperaturen von 100 bis 200 °C, vorzugsweise in Gegenwart an sich bekannter Härtungskatalysatoren, aushärtet, wobei das Gemisch aus

a) 20 bis 65 Gew.-% eines Siliconharzes der allgemeinen Formel

$$(CH_3)_a-\overset{\overset{(OR^1)_b}{|}}{Si}O_{\frac{4-(a+b)}{2}}$$

wobei
$R^1$ ein niederer Alkylrest mit 1 bis 4 Kohlenstoffatomen ist,
a einen Wert von 1 bis 1,7,
b einen Wert von 0,3 bis 1,0 hat,
b) 30 bis 65 Gew.-% eines α,ω-Methylsiloxandiols mit einem mittleren Molgewicht von 1 000 bis 20 000,
c) 5 bis 15 Gew.-% eines gegebenenfalls polymeren Kieselsäureesters der allgemeinen Formel

$$(R^2O)_cSiO_{\frac{4-c}{2}}$$

wobei
$R^2$ ein niedriger Kohlenwasserstoffrest mit 2 bis 4 Kohlenstoffatomen ist,
c einen Wert von 2,1 bis 4,0 hat,
und die Summe der Komponenten a), b) und c) 100 beträgt, besteht.

Die Komponente a) ist ein härtbares Methylalkoxysiloxan, welches in an sich bekannter Weise durch Umsetzung der entsprechenden Methylchlorsilane mit dem Alkohol $R^1OH$ zugängl ich ist. Der Rest $R^1$ ist vorzugsweise ein Ethylrest. Er kann jedoch auch ein Methylrest oder ein gegebenenfalls verzweigter Propyl- oder Butylrest sein.

Der Index a hat einen Wert von 1 bis 1,7, vorzugsweise einen Wert von 1 bis 1,5. Der Wert des Index b beträgt 0,3 bis 1,0 und ist vorzugsweise 0,5 bis 0,8.

Die Komponente b) ist ein Polydimethylsiloxan, welches endständig jeweils eine an ein Si-Atom gebundene Hydroxylgruppe aufweist. Das mittlere Molgewicht dieses Methylsiloxandiols soll in einem Bereich von 1 000 bis 20 000 liegen. Bevorzugt ist ein Bereich von 3 000 bis 10 000, insbesondere ein Bereich von 4 000 bis 8 000.

Die Komponente c) ist ein Kieselsäureester, der gegebenenfalls polymer vorliegen kann. Liegt der Kieselsäureester monomer vor, hat der Index c einen Wert von 4. Mit steigendem Polymerisationsgrad sinkt der Wert des Index c. Der Index c hat bei dem erfindungsgemäß zu verwendenden Kieselsäureester deshalb einen Wert von 2,1 bis 4,0.

Der Rest $R^2$ ist vorzugsweise der Ethylrest. Er kann jedoch auch der Propyl- oder Butylrest, geradkettig oder verzweigt, sein.

Die Beschichtung auf dem Preßblech wird nun in einfacher Weise dadurch gebildet, daß man das Gemisch der Komponenten a) bis c) in einem Lösungsmittel oder Lösungsmittelgemisch löst. Als Lösungsmittel sind gegebenenfalls chlorierte Kohlenwasserstoffe, besonders geeignet. Beispiele geeigneter Lösungsmittel sind 1,1,1-Trichlorethan, Perchlorethylen, Monofluortrichlormethan, Methylenchlorid, Testbenzin oder Toluol. Man gibt der Lösung geringe Mengen eines Härtungskatalysators, z. B. p-Toluolsulfonsäure, zu. Andere geeignete Katalysatoren sind zinnorganische Verbindungen, wie Dibutylzinndiacetat oder Dibutylzinndilaurat. Nachfolgend sind mehrere Rezepturen für Beschichtungsmittellösungen aufgeführt.

| Bestandteile (in Gew.-%) | Rezeptur 1 | 2 | 3 | 4 | 5 |
|---|---|---|---|---|---|
| Alkoxypolysiloxan a) | 4,7 | 6,0 | 4,0 | 4,7 | 6,0 |
| α,ω-Siloxandiol b) | 4,3 | 3,0 | 5,5 | 4,3 | 3,0 |
| Kieselsäureester c) | 1,0 | 1,0 | 0,5 | 1,0 | 1,0 |
| p-Toluolsulfonsäure | 0,2 | 0,2 | 0,2 | - | - |
| Dibutylzinndiacetat | - | - | - | 0,2 | 0,18 |
| Testbenzin Siedebereich 140 - 190°C | 10,0 | 10,0 | 10,0 | 10,0 | 10,0 |
| Testbenzin Siedebereich 80 - 110°C | 5,0 | 5,0 | 5,0 | 5,0 | 5,0 |
| 1,1,1-Trichlorethan | 10,0 | 10,0 | 10,0 | 10,0 | 10,0 |
| Monofluortrichlormethan | 63,0 | 63,0 | 63,0 | 63,0 | 63,0 |

Das Preßblech wird mit der Lösung des Beschichtungsmittels eingesprüht, bis ein zusammenhängender, dünner Film gebildet ist. Das Preßblech wird dann auf Temperaturen von 100 bis 200 °C erhitzt. Im Regelfalle bedarf es keiner getrennten Erhitzung, vielmehr nimmt das Preßblech in der Heizpresse diese Temperatur an, wobei die siliciumorganischen Verbindungen a) bis c) innerhalb weniger Sekunden miteinander reagieren und zu einem festen Film aushärten, der aber die erforderliche Elastizität besitzt und keine Bestandteile ausscheidet, welche die spätere Verarbeitung der Werkstoffplatten, insbesondere das Aufleimen von Folien oder Furnieren, das Lackieren oder Beschichten, behindern.

Das so beschichtete Preßblech trennt sich über mehrere Preßzyklen einwandfrei von den bei der Verpressung gebildeten Formkörpern. Nach 5 bis 8 Preßzyklen kann man das Preßblech erneut mit der Lösung des Beschichtungsmittels einsprühen, wobei hierfür die Entnahme des Preßbleches aus der Presse nicht notwendig ist.

Es hat sich nun gezeigt, daß sich die trennende Wirkung noch erheblich dadurch steigern läßt, wenn man den zu verpressenden Werkstoffen zusätzlich noch bestimmte interne Trennmittel zugibt. Dabei tritt ein synergistischer Effekt beim Zusammenwirken des auf dem Preßblech oder der Preßform befindlichen Beschichtungsmittels und des internen Trennmittels ein. Die Zahl der Preßzyklen mit guter Entformbarkeit steigt über die Zahl, die man mit dem Beschichtungsmittel oder dem internen Trennmittel allein erzielen kann, erheblich an. Hierdurch wird die Wirtschaftlichkeit des Verfahrens wesentlich erhöht.

Die Weiterausbildung des erfindungsgemäßen Verfahrens ist deshalb dadurch gekennzeichnet, daß man zusätzlich ein internes Trennmittel verwendet, welches man den lignozellulosehaltigen Werkstoffen in Mengen von 1 bis 5 Gew.-%, bezogen auf Polyisocyanat, vor der Verpressung zumischt.

Besonders bevorzugt ist ein Verfahren mit dem Kennzeichen, daß man als internes Trennmittel Organopolysiloxane der allgemeinen Formel

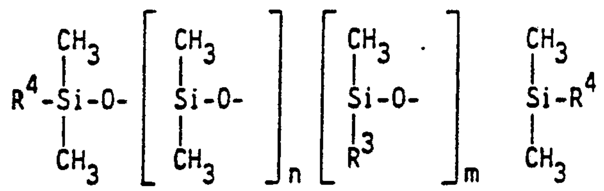

verwendet, wobei

$R^4$ ein Methylrest oder der Rest $R^3$,
n = 10 bis 300,
m = 1 bis 20 ist und
$R^3$ ein polarer Rest ist.

Durch das Methylpolysiloxangerüst erhält das Trennmittel tensidischen Charakter, reichert sich daher an den Grenzflächen an und wird dadurch wirksam. Durch den polaren Rest $R^3$ erhält das Trennmittel eine gewisse Verträglichkeit mit der Harzmatrix, die notwendig ist, um eine Einbindung in die Matrix zu gewährleisten.

Beispiele polarer Reste sind Polyoxyalkylenreste, Aminreste sowie Reste mit Carboxylgruppen, Sulfonsäuregruppen oder deren Salze und quaternäre Ammoniumreste.

Vorzugsweise ist $R^4$ der Methylrest. Besonders bevorzugt sind Verbindungen, bei denen der Index n einen Wert von 20 bis 100 und der Index m einen Wert von 1 bis 8 hat.

In einer bevorzugten Weiterbildung des erfindungsgemäßen Verfahrens verwendet man Organopolysiloxane, bei denen $R^3$ die Gruppe

$$-R^5O-\left[C_2H_4O-\right]_x\left[C_3H_6O-\right]_y R^6$$

in der

$R^5$ ein zweiwertiger Kohlenwasserstoffrest mit 2 bis 4 Kohlenstoffatomen,
$R^6$ ein Wasserstoff-, Acyl-, Carbamat- oder Alkylrest mit 1 bis 4 Kohlenstoffatomen,
n = 10 bis 200,
m = 1 bis 10 ist und
x und y so gewählt sind, daß das mittlere Molgewicht des Polyoxyalkylenblocks 200 bis 2 000 beträgt und dieser bis zu 50 Gew.-% Oxyethylengruppen aufweist, wobei, falls $R^6$ ein Wasserstoffatom ist, die endständige Oxyalkylengruppe eine Oxypropylengruppe ist,

bedeutet.

Vorzugsweise ist $R^5$ der Rest $-(CH_2)_3-$. $R^6$ ist vorzugsweise ein Wasserstoffrest. Das mittlere Molgewicht des Polyoxyalkylenblocks ist bevorzugt 200 bis 1 000, insbesondere 400 bis 700. Bevorzugt sind Polyoxyalkylenblöcke mit 10 bis 30 Gew.-% Oxyethyleneinheiten. Die endständige Oxyalkylengruppe soll, falls $R^6$ ein Wasserstoffrest ist, eine Oxypropylengruppe sein, damit eine Reaktion mit dem Isocyanat

möglichst verzögert und/oder nur in untergeordnetem Maße ablaufen kann. Die Oxypropylen und Oxyethylengruppen können im Polyoxyalkylenblock statistisch oder blockweise angeordnet sein.

Die Werte von x und y ergeben sich aus dem mittleren Molekulargewicht und dem Gehalt an Oxyethyleneinheiten. Hieraus errechnen sich die Werte von x = 1 bis 23 und für y Werte von 2 bis 35.

Die modifizierten Organopolysiloxane können dadurch hergestellt werden, daß man Organopolysiloxane, bei denen der Rest $R^3$ ein Wasserstoffrest ist, mit Polyoxyalkylenethern der Formel

$$CH_2 = CH—(CH_2)_p—O[C_2H_4O]_x[C_3H_6O]_yR^6,$$

wobei p = 1 oder 2 ist, in Gegenwart von Platinkatalysatoren umsetzt, entsprechend folgendem Beispiel :

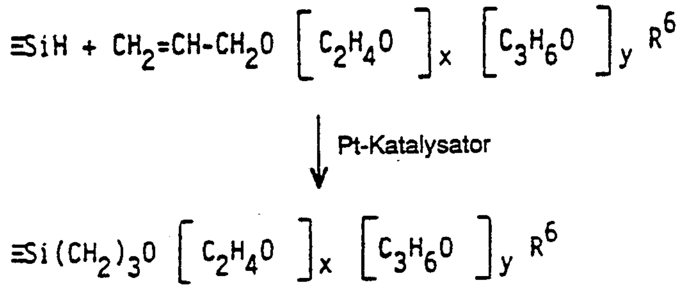


Derartige Reaktionen sind in der DE-PS 31 33 869 und DE-PS 32 15 317 beschrieben.

Eine weitere bevorzugte Weiterausbildung des erfindungsgemäßen Verfahrens besteht darin, daß man Organopolysiloxane verwendet, bei denen $R^3$ die Gruppe

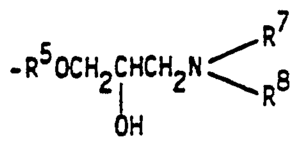

in der

$R^5$ die bereits angegebene Bedeutung hat,

$R^7$, $R^8$ einwertige Kohlenwasserstoffreste, Alkyloxyalkylreste oder gemeinsam Bestandteil eines Morpholin- oder Piperazinringes sind,

bedeutet.

$R^5$ hat die bereits gezeigte Bedeutung und ist deshalb bevorzugt der Rest $—(CH_2)_3—$. $R^7$ und $R^8$ können gleich oder verschieden sein und sind vorzugsweise Alkylreste mit 1 bis 10 Kohlenstoffatomen, wie Methyl-, Ethyl-, Propyl-, Isobutyl-, Cyclohexyl- oder Decylreste. Die Reste $R^7$, $R^8$ können auch Alkyloxyalkylreste, z. B. $—CH_2CH_2OCH_3$-Reste, sein. An die Stelle zweier Reste kann ein cyclischer Rest treten. Dabei sind die Reste $R^7$, $R^8$ gemeinsam Bestandteil eines Morpholin- oder Piperazinringes, z. B.

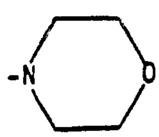

oder

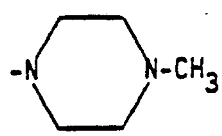

Besonders bevorzugte Reste $R^3$ sind Reste der Formel

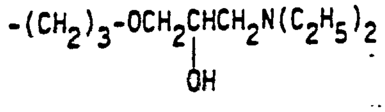

,

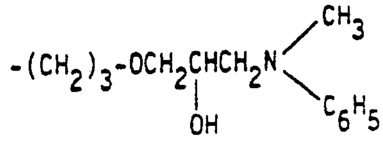

,

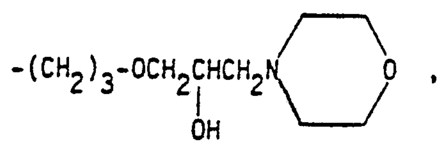

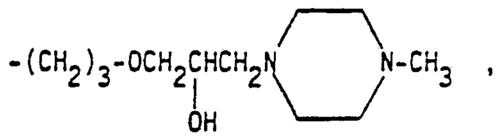

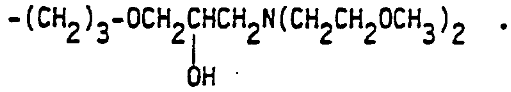

Die Herstellung dieser Siloxane kann dadurch erfolgen, daß man Polysiloxane, die als $R^3$-Reste Wasserstoffreste tragen, mit Allylglycidethern umsetzt und danach mit Aminen der Formel

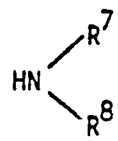

reagieren läßt. Auch dieses Herstellungsverfahren erfolgt in an sich bekannter Weise.

Schließlich besteht eine weitere bevorzugte Weiterausbildung des erfindungsgemäßen Verfahrens darin, daß man Organopolysiloxane verwendet, bei denen $R^3$ die Gruppe

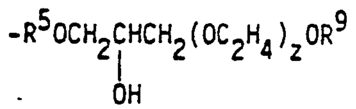

in der
$R^5$ die bereits angegebene Bedeutung hat,
$R^9$ ein Alkylrest mit 1 bis 4 Kohlenstoffatomen,
$z$ = 1 bis 10 ist,
bedeutet.

$R^9$ ist vorzugsweise ein Methyl- oder Butylrest.

Die Verbindungen können analog den vorhergenannten Verbindungen durch Umsetzung von Wasserstoffpolysiloxanen mit Allylglycidethern und nachfolgender Reaktion mit einem Polyethermonool der Formel $H[OC_2H_4]_zOR^9$ hergestellt werden.

Diese internen Trennmittel werden den lignozellulosehaltigen Werkstoffen in Mengen von 0,5 bis 5 Gew.-%, bezogen auf Polyisocyanat, zugemischt. Sie können gegebenenfalls in gelöster Form zugesetzt werden.

Als Polyisocyanate können die aus dem Stand der Technik für derartige Verfahren üblichen Isocyanate verwendet werden, wie z. B. zwei- und höherwertige, aliphatische, cycloaliphatische und vorzugsweise aromatische Isocyanate oder deren partiellen Umsetzungsprodukte mit Polyolen (sogenannte Prepolymere). Eine Aufzählung geeigneter Polyisocyanate findet sich in der DE-PS 23 25 926.

Als lignozellulosehaltiges Material kann zerkleinertes Holz in Form von Mehl und Spänen oder Stroh, Flachs, Sisal, Hanf, Zuckerrohrbagasse, Bambus, Erdnuß- oder Reisschalen und Kork genannt werden, das zu Platten oder Formkörpern verpreßt werden kann.

In den folgenden Beispielen werden das erfindungsgemäße Verfahren und die damit erzielbaren Trenneigenschaften näher beschrieben.

## Beispiel 1

Herstellung von Spanplatten

a) Beschichtung der Preßbleche :
Die Preßbleche werden mit einer Lösung folgender Zusammensetzung besprüht :

| | Gew.-Teile |
|---|---|
| Alkoxypolysiloxan | 4,7 |

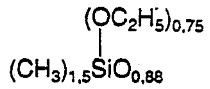

| | |
|---|---|
| α,ω-Polysiloxandiol Molgewicht 5700 | 4,3 |
| Kieselsäureester $(C_2H_5O)_{2,4}SiO_{0,8}$ | 1,0 |
| Katalysator p-Toluolsulfonsäure | 0,2 |
| Testbenzin Siedebereich 140-190 °C | 10,0 |
| Spezialbenzin Siedebereich 80-110 °C | 5,0 |
| 1.1.1-Trichlorethan | 10,0 |
| Monofluortrichlormethan | 63,0 |

Nach Bildung eines dünnen, zusammenhängenden Filmes wird das Preß blech 30 Sekunden auf etwa 140 °C erhitzt. Es entsteht ein fester lackartiger Überzug.

Zum Vergleich mit Trennmitteln des Standes der Technik werden die Preßbleche mit einer Lösung von 4 g Natriumoleat in 96 g Wasser (Vergleichsprodukt 1) bzw. einer 4 gew.-%igen Mikrowachs/Paraffindispersion, welche 16,0 Gew.-% Testbenzin, Siedebereich 140 bis 190 °C, und 80,0 Gew.-% 1.1.1-Trichlorethan als äußere Phase enthält (Vergleichsprodukt 2), eingesprüht und das Lösungsmittel verdampft.

b) Internes Trennmittel :

Es wird ein Polysiloxanblockmischpolymerisat folgender Formel

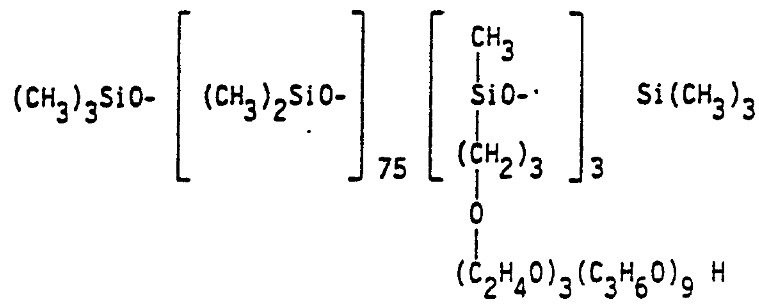

in Mengen von 3 Gew.-% dem Polyisocyanat zugesetzt.

c) Herstellung von Spanplatten

In einer Rahmenkonstruktion wird zunächst ein Spankuchen erstellt. Dazu werden 200 g Buchenspäne mit einer Restfeuchte von 11,5 % zusammen mit 12 g rohem 4,4'-Diphenylmethandiisocyanat mit einem NCO-Gehalt von 31,2 Gew.-% in einem Labormischer gut vermischt. Soweit bei den Versuchen ein internes Trennmittel verwendet wird, wird dies vorher dem Isocyanat zugegeben. Diese Mischung wird auf ein mit dem zu prüfenden Trennmittel versehenes Preßblech, welches die Rahmenkonstruktion trägt, geschüttet und mit einem Stampfer zu einem Spankuchen verdichtet. Es wird nun der Rahmen entfernt und die Oberseite des Spankuchens mit einem gleichermaßen beschichteten Preßblech abgedeckt.

Der von den beiden Preßblechen abgedeckte Spankuchen wird nun in eine Heizpresse gelegt und 8 Minuten mit einem Druck von 18 kp/cm² bei 180 °C verpreßt. Danach wird die Presse geöffnet und das Preßpaket entnommen. Es wird nun das obere und untere Preßblech abgezogen und das Abtrennverhalten und die Oberfläche der Preßbleche bezüglich ihrer Verschmutzung beurteilt. Nun wird erneut ein Spankuchen aufgebaut und eine Verpressung vorgenommen, ohne daß die Preßbleche erneut beschichtet werden. Es wird die Zahl der Preßvorgänge bestimmt, bei der eine gute Entformung möglich ist.

Die Ergebnisse sind in der Tabelle 1 zusammengefaßt :

Tabelle I

| Versuch | Beschichtung | internes Trennmittel | Anzahl einwandfreier Trennungen | Aussehen der Preßbleche |
|---|---|---|---|---|
| 1 | gemäß Beispiel 1 a) | ohne | 5 | keine Rückstandsbildung |
| 2 | gemäß Beispiel 1 a) | gemäß Beispiel 1 b) | 13 | keine Rückstandsbildung |

Tabelle I (Fortsetzung)

| Versuch | Beschichtung | internes Trennmittel | Anzahl einwandfreier Trennungen | Aussehen der Preßbleche |
|---|---|---|---|---|
| 3 | Vergleichsprodukt 1 | ohne | 1 | die Oberfläche der Bleche zeigt an einigen Stellen Rückstände |
| 4 | Vergleichsprodukt 2 | ohne | 1 | starke Rückstandsbildung |

Aus den Versuchen ergibt sich, daß die entsprechend dem erfindungsgemäßen Verfahren beschichteten Preßbleche eine wesentlich höhere Anzahl von Verpressungen ohne Verklebung und Rückstandsbildung ermöglichen als die Produkte des Standes der Technik. Die Ergebnisse zeigen ferner, daß bei zusätzlicher Verwendung des erfindungsgemäß zu verwendenden internen Trennmittels die Trenneigenschaften noch um das 3- bis 4 fache verbessert werden können. Durch das erfindungsgemäße Verfahren wird somit die technische Herstellung isocyanatgebundener Spanplatten wesentlich verbessert und eine rationellere Fertigung ermöglicht.

## Beispiel 2

Herstellung von Korkplatten

a) Beschichtung der Preßbleche :

Die Preßbleche werden mit einer Lösung folgender Zusammensetzung bespruht :

| | Gew.-Teile |
|---|---|
| Alkoxypolysiloxan<br>$(OC_2H_5)_{0,8}$<br>$(CH_3)_{1,3}SiO_{0,95}$ | 6,0 |
| α,ω-Polysiloxandiol Molgewicht 6500 | 3,0 |
| Kieselsäureester $(C_2H_5O)_{2,4}SiO_{0,8}$ | 1,0 |
| Katalysator p-Toluolsulfonsäure | 0,2 |
| Testbenzin Siedebereich 140-190 °C | 10,0 |
| Testbenzin Siedebereich 80-110 °C | 5,0 |
| 1.1.1-Trichlorethan | 10,0 |
| Monofluortrichlormethan | 63,0 |

Nach Bildung eines dünnen, zusammenhängenden Filmes wird das Preßblech 30 Sekunden lang auf etwa 140 °C erhitzt. Es entsteht ein fester, lackartiger Überzug.

b) Internes Trennmittel :

Es wird ein Polysiloxanblockmischpolymerisat folgender Formel

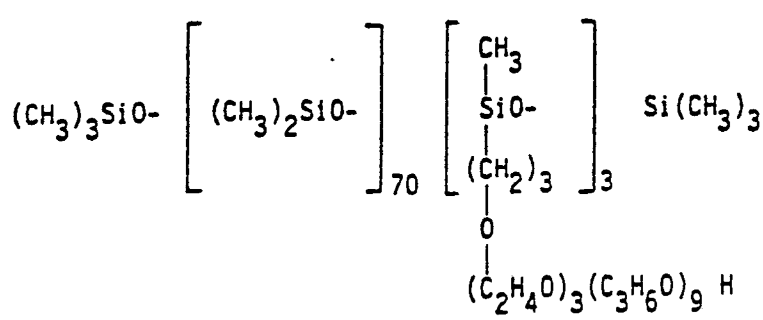

in Mengen von 3 Gew.-% der Isocyanatkomponente zugemischt.

c) Herstellung der Korkplatten :

In eine Rahmenkonstruktion wird zunächst eine Schüttung aus 100 g Korkgranulat mit einer Restfeuchte von 10 % zusammen mit 24 g eines Isocyanatprepolymeren mit 4,5 Gew.-% NCO-Gruppen in einem Labormischer gut vermischt. Soweit bei den Versuchen ein internes Trennmittel verwendet wird, wird dies vorher dem Isocyanat zugegeben. Diese Mischung wird auf ein mit dem zu prüfenden Trennmittel versehenen Preßblech, welches die Rahmenkonstruktion trägt, geschüttet und mit einem Stampfer zu einem Granulatkuchen verdichtet. Es wird nun der Rahmen entfernt und die Oberseite des Granulatkuchens mit einem gleichermaßen beschichteten Blech abgedeckt.

Der von den beiden Preßblechen abgedeckte Korkgranulatkuchen wird nun in eine Heizpresse gelegt und 6 Minuten lang mit einem Druck von 8 kp/cm² bei 140 °C verpreßt. Danach wird die Presse geöffnet und das Preßpaket entnommen. Es wird nun das obere und untere Preßblech abgezogen und das Abtrennverhalten und die Oberfläche der Preßbleche bezüglich der Verschmutzung beurteilt. Nun wird erneut ein Korkkuchen aufgebaut und eine Verpressung vorgenommen, ohne daß die Preßbleche erneut beschichtet werden. Es wird die Zahl der Preßvorgänge bestimmt, bei der eine gute Entformung möglich ist.

Die Ergebnisse sind in Tabelle II zusammengefaßt.

Tabelle II

| Versuch | Beschichtung | internes Trennmittel | Anzahl einwandfreier Trennungen | Aussehen der Preßbleche |
|---|---|---|---|---|
| 1 | gemäß Beispiel 2 a) | ohne | 4 | keine Rückstandsbildung |
| 2 | gemäß Beispiel 2 a) | gemäß Beispiel 2 b) | 14 | keine Rückstandsbildung |
| 3 | Vergleichsprodukt 1 | ohne | 2 | die Oberfläche der Bleche zeigt an einigen Stellen Rückstände |
| 4 | Vergleichsprodukt 2 | ohne | 1 | starke Rückstandsbildung |

Beispiel 3

Herstellung von Spanplatten

a) Beschichtung der Preßbleche :

gemäß Beispiel 1 a)

b) Internes Trennmittel :

Es wird ein Polysiloxanblockmischpolymerisat folgender Formel

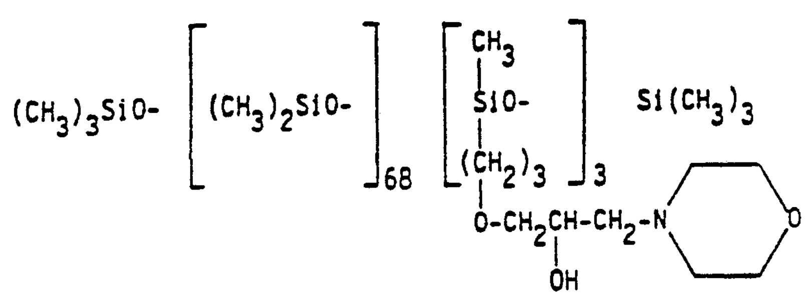

in Mengen von 2,5 Gew.-% dem Polyisocyanat zugesetzt.

c) Herstellung von Spanplatten :
gemäß Beispiel 1 c)
Die Ergebnisse sind in Tabelle III zusammengefaßt :

Tabelle III

| Versuch | Beschichtung | internes Trennmittel | Anzahl einwandfreier Trennungen | Aussehen der Preßbleche |
|---|---|---|---|---|
| 1 | gemäß Beispiel 1 a) | ohne | 5 | keine Rückstandsbildung |
| 2 | gemäß Beispiel 1 a) | gemäß Beispiel 3 b) | 16 | keine Rückstandsbildung |
| 3 | Vergleichsprodukt 1 | ohne | 2 | die Oberfläche zeigt starke Rückstandsbildung |
| 4 | Vergleichsprodukt 2 | ohne | 1 | die Oberfläche zeigt starke Rückstandsbildung |

Beispiel 4

Herstellung von Korkplatten
a) Beschichtung der Preßbleche :
gemäß Beispiel 2 a)
b) Internes Trennmittel :
Es wird ein Polysiloxanblockmischpolymerisat folgender Formel

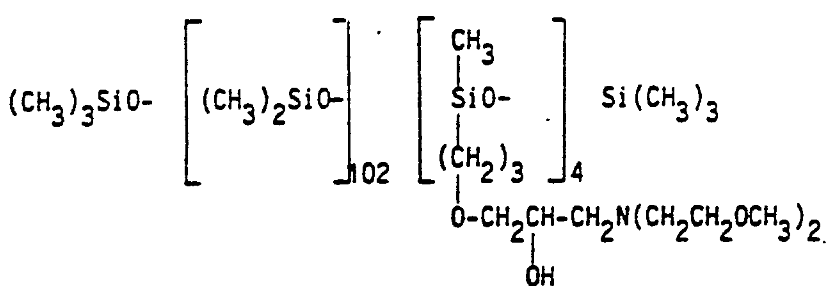

in Mengen von 4 Gew.-% dem Isocyanatprepolymeren (NCO-Gehalt 4,5 %) zugesetzt.
c) Herstellung der Korkplatten :
gemäß Beispiel 2 c)
Die Ergebnisse sind in Tabelle IV zusammengefaßt.

(Siehe Tabelle IV Seite 11 f.)

Tabelle IV

| Versuch | Beschichtung | internes Trennmittel | Anzahl einwandfreier Trennungen | Aussehen der Preßbleche |
|---|---|---|---|---|
| 1 | gemäß Beispiel 2 a) | ohne | 5 | keine Rückstandsbildung |
| 2 | gemäß Beispiel 2 a) | gemäß Beispiel 4 b) | 16 | keine Rückstandsbildung |
| 3 | Vergleichsprodukt 1 | ohne | 2 | die Oberfläche der Bleche zeigt an einigen Stellen Rückstände |
| 4 | Vergleichsprodukt 2 | ohne | 1 | starke Rückstandsbildung |

Beispiel 5

Herstellung von Korkplatten

a) Beschichtung der Preßbleche :
gemäß Beispiel 1 a)

b) Internes Trennmittel :
Es werden Polysiloxanblockmischpolymerisate der Formel

b1) 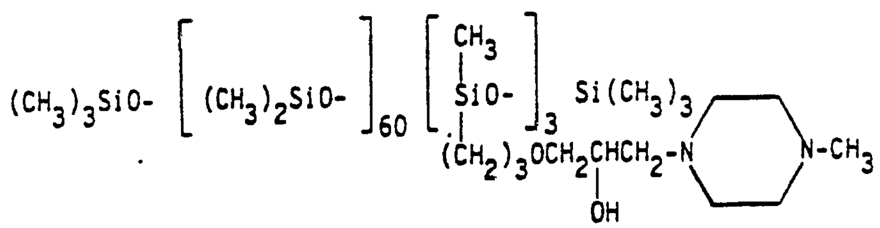

b2) 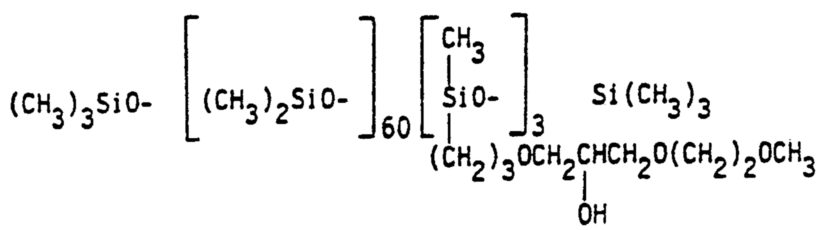

in Mengen von jeweils 1,5 Gew.-% dem NCO-Gruppen enthaltenden Prepolymer gemäß Beispiel 2 zugesetzt.

c) Herstellung von Korkplatten :
gemäß Beispiel 2 c)
Die Ergebnisse sind in Tabelle V zusammengefaßt.

(Siehe Tabelle V Seite 12 f.)

Tabelle V

| Versuch | Beschichtung | internes Trennmittel | Anzahl einwandfreier Trennungen | Aussehen der Preßbleche |
|---|---|---|---|---|
| 1 | gemäß Beispiel 1 a) | ohne | 5 | keine Rückstandsbildung |
| 2 | gemäß Beispiel 1 a) | gemäß Beispiel 5 b1) | 16 | keine Rückstandsbildung |
| 3 | gemäß Beispiel 1 a) | gemäß Beispiel 5 b2) | 15 | keine Rückstandsbildung |
| 4 | Vergleichsprodukt 1 | ohne | 2 | die Oberfläche der Bleche zeigt an einigen Stellen Rückstände |
| 5 | Vergleichsprodukt 2 | ohne | 1 | starke Rückstandsbildung |

Beispiel 6

Herstellung von Spanplatten

a) Beschichtung der Preßbleche :

Gemäß Beispiel 1 a), jedoch unter Verwendung gleicher Mengen Dibutylzinndilaurat als Katalysator.

b) Internes Trennmittel :

Es wird ein Polysiloxanblockmischpolymerisat der Formel

$$(CH_3)_3SiO-\left[(CH_3)_2SiO-\right]_{100}\left[\begin{matrix}CH_3\\|\\SiO-\\|\\(CH_2)_3O(C_2H_4O)_5(C_3H_6O)_5\ H\end{matrix}\right]_4 Si(CH_3)_3$$

in Mengen von 2,0 Gew.-% dem Polyisocyanat zugesetzt.

c) Herstellung der Spanplatten :

gemäß Beispiel 1 c)

Die Ergebnisse sind in Tabelle VI zusammengefaßt.

Tabelle VI

| Versuch | Beschichtung | internes Trennmittel | Anzahl einwandfreier Trennungen | Aussehen der Preßbleche |
|---|---|---|---|---|
| 1 | gemäß Beispiel 6 a) | ohne | 5 | keine Rückstandsbildung |

Tableau VI (Fortsetzung)

| Versuch | Beschichtung | internes Trennmittel | Anzahl einwandfreier Trennungen | Aussehen der Preßbleche |
|---|---|---|---|---|
| 2 | gemäß Beispiel 6 a) | gemäß Beispiel 6 b) | 10 | keine Rückstandsbildung |
| 3 | Vergleichsprodukt 1 | ohne | 2 | die Oberfläche der Bleche zeigt an einigen Stellen Rückstände |
| 4 | Vergleichsprodukt 2 | ohne | 1 | starke Rückstandsbildung |

**Patentansprüche**

1. Verfahren zur Herstellung von Formkörpern durch Heißverpressen von lignozellulosehaltigen Werkstoffen mit Polyisocyanaten als Bindemittel unter Mitverwendung eines Mittels zur Trennung des Formkörpers von der Oberfläche der verwendeten Metallpresse, dadurch gekennzeichnet, daß man auf die dem Preßgut zugewendete Oberfläche der Preßbleche oder der Preßformen ein Gemisch siliciumorganischer Verbindungen aufbringt und bei Temperaturen von 100 bis 200 °C, vorzugsweise in Gegenwart an sich bekannter Härtungskatalysatoren, aushärtet, wobei das Gemisch aus

a) 20 bis 65 Gew.-% eines Siliconharzes der allgemeinen Formel

$$(CH_3)_a-\overset{(OR^1)_b}{\overset{|}{Si}}O_{\frac{4-(a+b)}{2}}$$

wobei

$R^1$ ein niedriger Alkylrest mit 1 bis 4 Kohlenstoffatomen ist,

a einen Wert von 1 bis 1,7,

b einen Wert von 0,3 bis 1,0 hat,

b) 30 bis 65 Gew.-% eines α,ω-Methylsiloxandiols mit einem mittleren Molgewicht von 1 000 bis 20 000,

c) 5 bis 15 Gew.-% eines gegebenenfalls polymeren Kieselsäureesters der allgemeinen Formel

$$(R^2O)_cSiO_{\frac{4-c}{2}}$$

wobei

$R^2$ ein niedriger Kohlenwasserstoffrest mit 2 bis 4 Kohlenstoffatomen ist,

c einen Wert von 2,1 bis 4,0 hat,

und die Summe der Komponenten a), b) und c) 100 beträgt besteht.

2. Weiterausbildung des Verfahrens nach Anspruch 1, dadurch gekennzeichnet, daß man zusätzlich ein internes Trennmittel verwendet, welches man den lignozellulosehaltigen Werkstoffen in Mengen von 0,5 bis 5 Gew.-%, bezogen auf Polyisocyanat, vor der Verpressung zumischt.

3. Verfahren nach Anspruch 2, dadurch gekennzeichnet, daß man als internes Trennmittel Organopolysiloxane der allgemeinen Formel

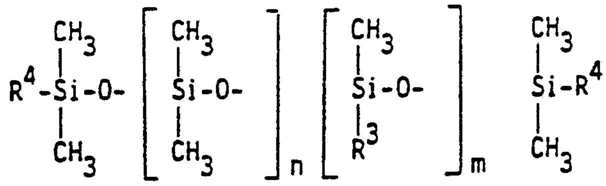

verwendet, wobei
$R^4$ ein Methylrest oder der Rest $R^3$
n = 10 bis 300,
m = 1 bis 20 ist und
$R^3$ ein polarer Rest ist.

4. Verfahren nach Anspruch 3, dadurch gekennzeichnet, daß man Organopolysiloxane verwendet, bei denen $R^3$ die Gruppe

$$-R^5O-\left[C_2H_4O-\right]_x\left[C_3H_6O-\right]_y R^6$$

in der
$R^5$ ein zweiwertiger Kohlenwasserstoffrest mit 2 bis 4 Kohlenstoffatomen,
$R^6$ ein Wasserstoff-, Acyl-, Carbamat- oder Alkylrest mit 1 bis 4 Kohlenstoffatomen,
n = 10 bis 200,
m = 1 bis 10 ist und
x und y so gewählt sind, daß das mittlere Molgewicht des Polyoxyalkylenblocks 200 bis 2 000 beträgt und dieser bis zu 50 Gew.-% ·Oxyethylengruppen aufweist, wobei, falls $R^6$ ein Wasserstoffatom ist, die endständige Oxyalkylengruppe eine Oxypropylengruppe ist,
bedeutet.

5. Verfahren nach Anspruch 3, dadurch gekennzeichnet, daß man Organopolysiloxane verwendet, bei denen $R^3$ die Gruppe

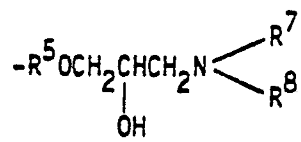

in der
$R^5$ die bereits angegebene Bedeutung hat,
$R^7$, $R^8$ einwertige Kohlenwasserstoffreste, Alkyloxyalkylreste oder gemeinsam Bestandteil eines Morpholin- oder Piperazinringes sind,
bedeutet.

6. Verfahren nach Anspruch 3, dadurch gekennzeichnet, daß man Organopolysiloxane verwendet, bei denen $R^3$ die Gruppe

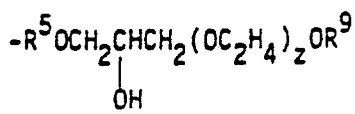

in der
$R^5$ die bereits angegebene Bedeutung hat,
$R^9$ ein Alkylrest mit 1 bis 4 Kohlenstoffatomen,
z = 1 bis 10 ist,
bedeutet.

**Claims**

1. Process for the preparation of mouldings by hot pressing of lignocellulose-containing materials with polyisocyanates as binders and with the conjoint use of an agent for releasing the moulding from the surface of the metal press used, characterized in that a mixture of organosilicon compounds is applied to the surface of the pressing plates or pressing moulds which faces the material to be pressed, and is cured at temperatures of 100 to 200 °C, preferably in the presence of curing catalysts known per se, the mixture consisting of

a) 20 to 65 % by weight of a silicone resin of the general formula

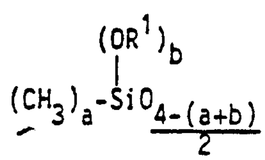

wherein

$R^1$ is a lower alkyl radical with 1 to 4 carbon atoms,

a has a value from 1 to 1.7 and

b has a value from 0.3 to 1.0,

b) 30 to 65 % by weight of an α,ω-methylsiloxanediol having a mean molecular weight of 1 000 to 20,000 and

c) 5 to 15 % by weight of an optionally polymeric silicic acid ester of the general formula

$$(R^2O)_c SiO_{\frac{4-c}{2}}$$

wherein

$R^2$ is a lower hydrocarbon radical with 2 to 4 carbon atoms and

c has a value of 2.1 to 4.0,

with the sum of components a), b) and c) amounting to 100.

2. Further development of the process according to Claim 1, characterized in that additionally there is used an internal release agent which is added to the lignocellulose-containing materials in amounts of 0.5 to 5 % by weight, relative to polyisocyanate, prior to the pressing operation.

3. Process according to Claim 2, characterized in that organopolysiloxanes of the general formula

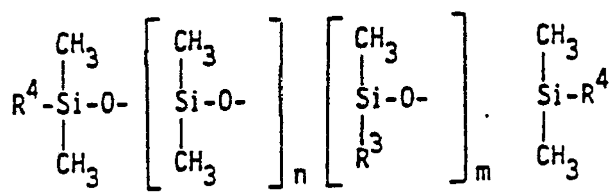

wherein

$R^4$ is a methyl radical or the radical $R^3$,

n is 10 to 300,

m is 1 to 20 and

$R^3$ is a polar radical, are used as internal release agent.

4. Process according to Claim 3, characterized in that organopolysiloxanes in which $R^3$ is the group

$$-R^5O-\left[C_2H_4O-\right]_x \left[C_3H_6O-\right]_y R^6$$

in which

$R^5$ is a divalent hydrocarbon radical with 2 to 4 carbon atoms,

$R^6$ is a hydrogen, acyl, carbamate or alkyl radical with 1 to 4 carbon atoms,

n is 10 to 200,

m is 1 to 10 and

x and y are so chosen that the mean molecular weight of the polyoxyalkylene block is 200 to 2 000 and this block contains up to 50 % by weight oxyethylene groups, with the terminal oxyalkylene group being an oxypropylene group if $R^6$ is a hydrogen atom, are used.

5. Process according to Claim 3, characterized in that organopolysiloxanes in which $R^3$ denotes the group

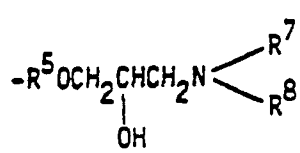

in which

$R^5$ has the meaning already given and

$R^7$ and $R^8$ are monovalent hydrocarbon radicals, alkoxyalkyl radicals or, conjointly, part of a morpholine or piperazine ring, are used.

6. Process according to Claim 3, characterized in that organopolysiloxanes in which $R^3$ denotes the group

$$-R^5OCH_2CH(OH)CH_2(OC_2H_4)_zOR^9$$

in which

$R^5$ has the meaning already given,

$R^9$ is an alkyl radical with 1 to 4 carbon atoms and

z is 1 to 10, is used.

**Revendications**

1. Procédé de fabrication de corps moulés par pressage à chaud de matériau contenant de la lignocellulose et des polyisocyanates comme liant, en co-utilisant un moyen de séparation du corps moulé de la surface de la presse en métal utilisée, caractérisé en ce qu'on met sur la surface de la plaque de compression ou de la matrice de compression, en regard de la matière à presser, un mélange de composés organo-siliciques que l'on durcit à des températures comprises entre 100 et 200 °C, de préférence en présence d'un catalyseur de durcissement connu en soit, le mélange étant composé de :

a) 20 à 65 % en poids d'une résine de silicone de formule générale :

$$(CH_3)_a\text{-}Si(OR^1)_bO_{\frac{4-(a+b)}{2}}$$

dans laquelle :

$R^1$ est un radical alkyle inférieur ayant de 1 à 4 atomes de carbone,

a a une valeur de 1 à 1,7,

b a une valeur de 0,3 à 1,

b) 30 à 65 % en poids d'un α,ω-Méthylsiloxandiol ayant une masse molaire moyenne de 1 000 à 20 000,

c) 5 à 15 % en poids d'un ester silicique le cas échéant polymère de formule générale :

$$(R^2O)_cSiO_{\frac{4-c}{2}}$$

dans laquelle :

$R^2$ est un radical hydrocarboné de 2 à 4 atomes de carbone,

c a une valeur de 2,1 à 4,

la somme des composants a), b) et c) s'élevant à 100.

2. Procédé suivant la revendication 1, caractérisé en ce qu'en outre on utilise un moyen interne de séparation, en une quantité de 0,5 à 5 % en poids par rapport au polyisocyanate, que l'on mélange au matériau contenant de la lignocellulose, avant le pressage.

3. Procédé selon la revendication 2, caractérisé en ce que l'on utilise en tant que moyen interne de séparation un polyorganosiloxane de formule générale

$$R^4\text{-}Si(CH_3)_2\text{-}O\text{-}\left[Si(CH_3)_2\text{-}O\text{-}\right]_n\left[Si(CH_3)(R^3)\text{-}O\text{-}\right]_m Si(CH_3)_2\text{-}R^4$$

dans laquelle :

$R^4$ est un radical méthyle ou le radical $R^3$,

n = 10 à 300

m = 1 à 20 et $R^3$ est un radical polaire.

4. Procédé suivant la revendication 3, caractérisé en ce qu'on utilise un polyorganosiloxane dans lequel $R^3$ est le groupe

$$-R^5O-\left[C_2H_4O-\right]_x\left[C_3H_6O-\right]_y R^6$$

dans lequel :

$R^5$ représente un radical hydrocarboné bivalent de 2 à 4 atomes de carbone,

$R^6$ est un hydrogène, un radical acyle, un radical carbamate ou un radical alkyle de 1 à 4 atomes de carbone,

n = 10 à 200

m = 1 à 10 et

x et y sont choisis de façon à ce que la masse molaire moyenne de la partie polyoxyalkylène soit de 200 à 2 000 et que celle-ci présente jusqu'à 50 % en poids de groupe oxyéthylène, et que dans le cas ou $R^6$ est un atome d'hydrogène le groupe oxyalkylène terminal est un groupe oxypropylène.

5. Procédé suivant la revendication 3, caractérisé en ce qu'on utilise un polyorganosiloxane dans lequel $R^3$ représente le groupe

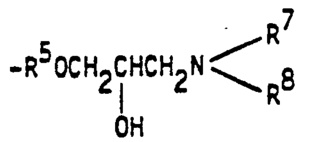

dans lequel :

$R^5$ a la signification précédemment indiquée,

$R^7$, $R^8$ est un radical hydrocarboné monovalent, un radical alkyloxyalkyle, ou forment ensemble une partie d'un cycle morpholine ou pipérazine.

6. Procédé suivant la revendication 3, caractérisé en ce qu'on utilise un polyorganosiloxane dans lequel $R^3$ représente le groupe

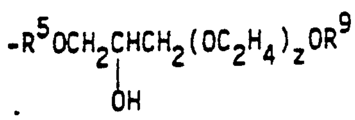

dans lequel :

$R^5$ a la signification précédemment indiquée,

$R^9$ est un radical alkyle de 1 à 4 atomes de carbone

z = 1 à 10.